(19) **Europäisches Patentamt**
**European Patent Office**
**Office européen des brevets**

(11) Veröffentlichungsnummer : **0 014 833**
**B1**

(12) **EUROPÄISCHE PATENTSCHRIFT**

(45) Veröffentlichungstag der Patentschrift :
**11.05.83**

(51) Int. Cl.³ : **H 02 P 13/22**, H 02 M  3/335,
**G 05 F  1/64**

(21) Anmeldenummer : **80100139.7**

(22) Anmeldetag : **11.01.80**

(54) Schaltungsanordnung zur Regelung der Ausgangsspannung eines Eintakt-Durchflussumrichters.

(30) Priorität : 23.01.79 DE 2902463

(43) Veröffentlichungstag der Anmeldung :
03.09.80 Patentblatt 80/18 .

(45) Bekanntmachung des Hinweises auf die Patenterteilung : 11.05.83 Patentblatt 83/19

(84) Benannte Vertragsstaaten :
**AT CH DE FR GB IT NL SE**

(56) Entgegenhaltungen :
**DD A 136 445**
**DE A 2 702 277**
**DE B 2 603 196**
**ELECTRONIC   DESIGN, Band   26,   Nr. 24,**
**22. November  1978  R. KELLER  « Closed-loop**
**testing  and  computer  analysis  aid  design  of**
**control systems » Seiten 132 bis 138**
**TELCOM REPORT, Band 1, Nr. 6, Dezember 1978**
**K. RAMBOLD « Stromversorgungsgeräte für die**
**Nachrichtentechnik — Besonderheiten und ange-**
**wandte Prinzipien » Seiten 404 bis 409**
**COMPUTER DESIGN, Band 17, Nr. 3, März 1978**
**R. J. APFEL et al. « Universal switching regulator**
**diversifies power subsystem applications » Seiten 103 bis 112**

(73) Patentinhaber : **SIEMENS AKTIENGESELLSCHAFT**
**Berlin und München Wittelsbacherplatz 2**
**D-8000 München 2 (DE)**

(72) Erfinder : **Brakus, Bogdan, Dipl.-Ing.**
**Ihleweg 4**
**D-8031 Puchheim (DE)**  .

EP 0 014 833 B1

# Schaltungsanordnung zur Regelung der Ausgangsspannung eines Eintakt-Durchflußumrichters

Die Erfindung bezieht sich auf eine Schaltungsanordnung zur Regelung der Ausgangsspannung eines Eintakt-Durchflußumrichters mit Freilaufdiode und daran angeschlossener Drossel im Hauptstromkreis, mit einem mit seiner Schaltstrecke zwischen Eingang und Ausgang des Umrichters angeordneten elektronischen Schalter, mit einer der Steuerstrecke des elektronischen Schalters vorgeschalteten eine bistabile Kippstufe enthaltenden Steuereinrichtung zur Impulsbreitensteuerung, wobei die bistabile Kippstufe durch Taktimpulse eines Taktgebers setzbar und durch Abschaltimpulse rücksetzbar ist, die von einem eine Vergleichsspannungsquelle enthaltenden meßgrößengesteuerten Schwellwertschalter abgegeben werden. Dabei ist unter einem Durchflußumrichter ein Umrichter zu verstehen, der bei stromführendem Schalter Energie zum Ausgang überträgt.

Eine derartige Schaltungsanordnung ist bereits aus der DE-B2- 2 603 196 bekannt. Bei der bekannten Schaltungsanordnung wird der Schalttransistor mittels eines Steuerimpulsübertragers angesteuert, der zusammen mit dem Schalttransistor eine bistabile Kippstufe bildet.

Der meßgrößengesteuerte Schwellwertschalter bildet die Abschaltimpulse in einem Spannungskomparator in Abhängigkeit von der Ausgangsspannung des Eintakt. Durchflußumrichters, wobei in die Signalbildung zusätzlich die Störgröße « Eingangsspannung » und die Störtendenz « Laststrom » Eingang finden. Dazu wird dem Istwert der Ausgangspannung eine aus dem Leistungsteil des Eintakt. Durchflußumrichters abgeleitete periodische zusätzliche Meßspannung phasenrichtig überlagert. Die Meßspannung wird an einem Meßwiderstand gewonnen, der mit dem Kondensator eines LC-Siebes am Ausgang des Eintakt-Durchflußumrichters in Reihe geschaltet ist. Während der Einschaltdauer des elektronischen Schalters ist in der zusätzlichen Meßspannung ein annähernd lineares Abbild des Anstieges des Stromes im elektronischen Schalter enthalten. Zwischen dem Schwellwertschalter und einem Regelumsetzer ist ein Optokoppler eingefügt.

Diese Anordnung ermöglicht es, bei der Bildung des Abschaltsignals zusätzlich die Störgröße « Eingangsspannung » und die Störtendenz « Laststrom » zu berücksichtigen. Allerdings wird die Siebwirkung des im ersten LC-Glied enthaltenden Kondensators durch den in Serie liegenden Widerstand herabgesetzt, so daß bei hohen Anforderungen an die Siebung ein zweites LC-Glied nötig ist. An der Drossel des zweiten Siebgliedes entsteht dann ein Gleichstromabfall, der nicht ohne weiteres ausgeregelt werden kann.

Ferner ist aus « Electronic Design », Band 26, Nr. 24, 22.11.1978, S. 132 bis 138 ein Eintakt-Durchflußumrichter bekannt, bei dem ein Vergleicher eine der Ausgangsspannung proportionale Spannung mit einer Vergleichsspannung vergleicht, die mittels einer RC-Anordnung aus der Spannung gewonnen wird, die am Verbindungspunkt einer Freilaufdiode mit einer Siebdrossel anliegt. Der Vergleicher enthält ferner eine Anordnung mit einem Flip-Flop und mit logischen Verknüpfungsgliedern.

Aufgabe der Erfindung ist es, eine Schaltungsanordnung der eingangs genannten Art derart auszubilden, daß sie eine möglichst hohe Stabilität des Regelkreises und eine hohe Genauigkeit gewährleistet, wobei die Regelung sowohl den dynamischen Laständerungen als auch den Änderungen der Versorgungsspannung schnell entgegenwirken soll.

Gemäß der Erfindung wird die Schaltungsanordnung des eingangs genannten Art zur Lösung dieser Aufgabe derart ausgebildet, daß der Kondensator einer am Ausgang des Umrichters angeschlossenen Kondensator-Widerstand-Serienschaltung und eine Vergleichsspannungsquelle mit ein und demselben, einen Bezugspunkt bildenden Anschluß des Ausgangs verbunden sind und daß der gegenüber dem Bezugspunkt Spannung führende Anschluß des Kondensators über einen Spannungsteiler an den Meßgrößeneingang und der mit der Freilaufdiode verbundene Anschluß der Drossel über einen weiteren Widerstand an den Meßgrößeneingang des Schwellwertschalters geführt sind und daß der zwischen Spannung führendem Anschluß des Kondensators und Schwellwertschalter liegende Widerstand des Spannungsteilers durch einen Kondensator überbrückt ist, dessen Kapazität wesentlich kleiner bemessen ist als die Kapazität des Kondensators der Kondensator-Widerstand-Serienschaltung und daß der Wert des Widerstandes der Kondensator-Widerstand-Serienschaltung wesentlich, insbesondere mindestens um eine Größenordnung, kleiner bemessen ist als der Wert der Widerstände des Spannungsteilers. Die bistabile Kippstufe kann insbesondere ein RS-Flip-Flop sein.

Durch diese Maßnahmen ergibt sich der Vorteil, daß sich mit einfach realisierbaren Mitteln zugleich eine hohe Genauigkeit und eine geringe Welligkeit der Ausgangsspannung erzielen lassen. Darüberhinaus lassen sich in Geräten mit galvanischer Trennung auf besonders einfach realisierbare Weise sowohl die Ausgangsspannung direkt regeln als auch die Störgröße Versorgungsspannung dynamisch auswerten.

Vorteilhafte weitere Ausgestaltungen der Erfindung ergeben sich aus den Unteransprüchen.

Die Erfindung wird anhand der in den Figuren dargestellten Ausführungsbeispiele näher erläutert.

Die Figuren zeigen je eine Schaltungsanordnung zur Spannungsregelung von fremdgetakteten Durchflußumrichtern mit Gewinnung von Abschaltsignalen für die Pulsbreitenregelung mit Hilfe eines R-C-Netzwerks, und zwar

Figur 1 mit Potentialtrennung und mit dem positiven Ausgangsanschluß als Bezugspunkt für die Referenzspannung und

2

Figur 2 mit Potentialtrennung und mit dem negativen Ausgangsanschluß als Bezugspunkt für die Referenzspannung,

Figur 3 ohne Potentialtrennung und mit dem positiven Aus-Ausgangsanschluß als Bezugspunkt und

Figur 4 den zeitlichen Verlauf der Meßspannung für ein bevorzugtes Bemessungsbeispiel.

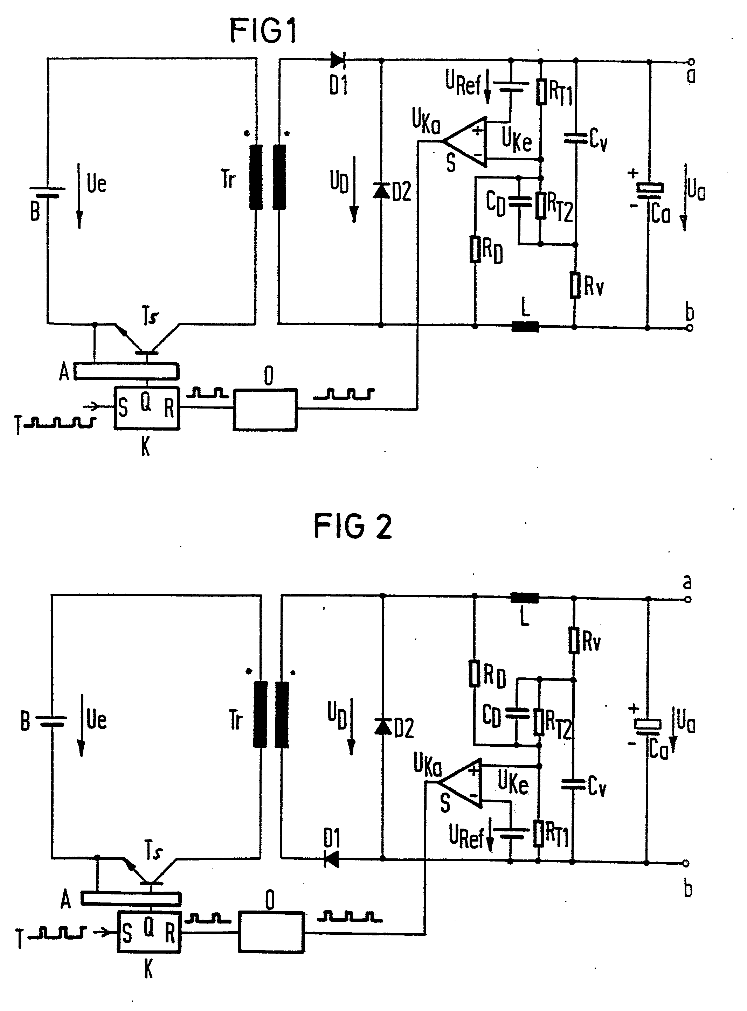

Bei dem Eintakt-Durchflußumrichter nach Fig. 1 ist die Quelle B der Eingangsspannung $U_e$ über die Emitter-Kollektorstrecke des Schalttransistors Ts an die Primärwicklung des Transformators Tr geführt.

An die Sekundärwicklung des Transformators ist die Gleichrichterdiode D1 angeschlossen, die in dem einen Längszweig zwischen Transformator Tr und Ausgangsanschluß a angeordnet ist. Das andere Ende der Sekundärwicklung ist über die Drossel L an den anderen Ausgangsanschluß b geführt.

Die Diode D1 ist so gepolt, daß sie bei leitend gesteuertem Transistor Ts ebenfalls Strom führt.

Im Anschluß an die Gleichrichterdiode D1 und vor der Drossel L ist in einem Querzweig die Freilaufdiode D2 angeordnet, so daß der durch die Drossel L fließende Strom auch bei gesperrter Gleichrichterdiode D1 weiterfließen kann.

Parallel zum Ausgang a, b liegt der Siebkondensator $C_a$, an dem die Ausgangsspannung $U_a$ anliegt. Außerdem ist die Serienschaltung, bestehend aus dem Kondensator $C_v$ und dem Widerstand $R_v$ an den Ausgang a, b angeschlossen. Parallel zum Kondensator $C_v$ liegt die aus den Widerständen $R_{T1}$ und $R_{T2}$ bestehende Serienschaltung. Parallel zum Widerstand $R_{T2}$ liegt der Kondensator $C_D$.

Der Kondensator $C_v$ und die Vergleichsspannungsquelle, die die Referenzspannung $U_{Ref}$ liefert, liegen jeweils mit einem Anschluß am Ausgangsanschluß a. Der andere Anschluß der Vergleichsspannungsquelle ist mit dem Pluseingang + des als Operationsverstärker ausgebildeten Schwellwertschalters S verbunden. Der Minuseingang- des Schwellwertschalters S ist sowohl an den Verbindungspunkt der Widerstände $R_{T1}$ und $R_{T2}$ angeschlossen als auch über den Widerstand $R_D$ an den Verbindungspunkt von Freilaufdiode D2 und Drossel L geführt.

Der Ausgang des Schwellwertschalters S ist über den Optokoppler O, der gegebenenfalls entfallen kann, an den Rücksetzeingang der bistabilen Kippstufe K geführt. Die potentialgetrennte Übertragung der Regelsignale mittels des Optokopplers ist möglich, da die Regelsignale $U_{ka}$ nach dem Schwellwertschalter S bereits digital sind. Der Setzeingang S der bistabilen Kippstufe K wird mit Taktimpulsen T eines in der Figur nicht näher dargestellten Taktgebers beaufschlagt. Der Ausgang Q der Kippstufe K ist über eine Austeuerschaltung A an die Basis des Schalttransistors geführt.

Bei der Schaltungsanordnung nach Fig. 1 ist die Drossel L in der zum Anschluß b führenden Minusleitung angeordnet. Fig. 2 zeigt eine Schaltungsanordnung, bei der die Drossel L in der zum Anschluß a führenden Plusleitung angeordnet ist. In diesem Fall sind die Vergleichsspannungsquelle für die Referenzspannung $U_{Ref}$ und der Kondensator $C_v$ an die zum Anschluß b führende Minusleitung angeschlossen.

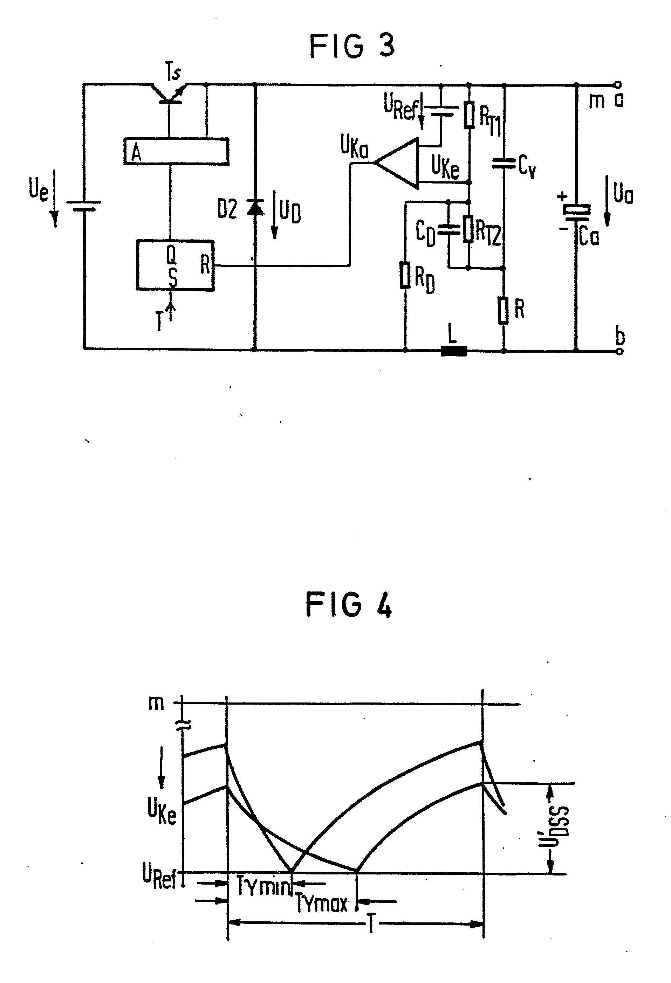

Bei der in Fig. 3 gezeigten Schaltungsanordnung ist keine Potentialtrennung zwischen Ein- und Ausgang vorgesehen. Die Schaltungsanordnung ergibt sich aus der nach Fig. 1 dadurch, daß der Transformator Tr durch eine zweiadrige Durchverbindung ersetzt wird und an die Stelle der Gleichrichterdiode D1 eine Durchverbindung tritt.

Für die Bemessung gilt jeweils

$$R_v \ll R_{T1} \; ; \; R_v \ll R_{T2} \; ; \; C_D \ll C_v$$

Für die in den Figuren 1 bis 3 gezeigten Ausführungsbeispiele ergibt sich die folgende Wirkungsweise :

Der Schalttransistor Ts wird periodisch über den S-Eingang eines R-S-Flip-Flops von Taktgeber eingeschaltet. Das Abschaltsignal wird mit Hilfe eines R-C-Netzwerkes gewonnen und durch den Anstieg der Meßspannung $U_{Ke}$ über den Wert der Referenzspannung $U_{Ref}$ ausgelöst. Dabei wird der Regelkreis im wesentlichen von der Eingangsspannung und von Laständerungen als Störgrößen beeinflußt. Diese beiden Störgrößen wirken sowohl statisch als auch dynamisch.

Die Meßspannung $U_{Ke}$ besteht aus zwei Komponenten $U'_a$ und $U'_D$, die einander überlagert sind. Die Kondensator-Widerstand-Serienschaltung $C_v$, $R_v$ dient zur hochfrequenzmäßigen Trennung der Meßspannung von der Ausgangsspannung $U_A$.

Die beiden Komponenten lassen sich wie folgt einzeln bestimmen :

Die von der Ausgangsspannung $U_a$ herrührende Gleichspannungskomponente ergibt sich aus der Annahme, daß der Widerstand $R_D$ gegen geht. Für diesen Fall gilt für die am Widerstand $R_{T1}$ liegende Spannung

$$U'_a = U_a R_{T1}/R_{T1} + R_{T2} + R_v \tag{1}$$

Die an der gesperrten Freilaufdiode D2 liegende Spannung $U_D$ ist der Eingangsspannung proportional. Aus dieser Spannung wird mit Hilfe der Schaltmittel $R_D$, $C_D$, $R_{T1}$ und $R_{T2}$ am Kondensator $C_D$ eine aus e-Funktionen zusammengesetzte Dreieckspannung $U'_D$ erzeugt, deren zeitlicher Verlauf von der Spannung $U_D$ und vom Tastgrad $\gamma$ abhängt. Untersuchungen im Rahmen der Erfindung haben ergeben, daß das aus Stabilitätsgründen maximal zulässige Tastverhältnis durch den Quotienten $T/\tau$ bestimmt

wird. Dabei ergibt sich für den Grenzfall folgendes Tastverhältnis

$$\gamma_{grenz} = \frac{1}{\frac{T}{\tau}} \, \ln \frac{e^{\frac{T}{\tau}} + 1}{2} \tag{2}$$

Für den Hub der Dreieckspannung ergibt sich

$$u'_{DSS} = U_D \cdot \frac{R_D}{R_D} \; \frac{1 + e^{\frac{T}{\tau}} - e^{\frac{T}{\tau}\gamma} - e^{\frac{T}{\tau}(1-\gamma)}}{e^{\frac{T}{\tau}} - 1} \tag{3}$$

mit $\tau = R_p \cdot C_D$
und $T = 1/f_T$,
wobei $f_T$ die Taktfrequenz ist.

Im folgenden wird ein vorteilhaftes Bemessungsbeispiel angegeben.

Zunächst wird nach Gleichung (2) das Verhältnis $T/\tau = 3{,}33$ gewählt. Dadurch ist bei vorgegebener Kapazität $C_D$ der Innenwiderstand $R_p$ des Teilers $R_{T1}$, $R_{T2}$ bestimmt. Die Amplitude der am Kondensator $C_D$ auftretenden Wechselspannungskomponente $U'_{DSS}$ läßt sich mit dem Widerstand $R_D$ einstellen. Da diese Amplitude im Betrieb durch die Höhe der Eingangsspannung $U_e$ bestimmt wird, können die Spannungsschwankungen am Eingang schnell ausgeregelt werden.

Es ergeben sich z. B. für

$U_a$ = 12 V
$U_{e \, max}$ = 48 V $\quad \gamma_{min}$ = 0,25 $\quad U_{DSS \, max}$ = 79 mV
$U_{e \, min}$ = 24 V $\quad \gamma_{max}$ = 0,5 $\quad U_{DSS \, min}$ = 50 mV
$T/\tau$ = 3,333
$R_p$ = 150 $\Omega$
$R_D$ = 49,1 k$\Omega$
$f_T$ = 20 kHz ;
$C_D$ = 0,1 $\mu$F
$C_v$ = 1 $\mu$F

Die Wahl des Widerstandes $R_v$ wird durch die gewünschte Eckfrequenz des $R_v$-$C_v$-Siebs bestimmt. Mit $R_v$ = 6,8 $\Omega$ liegt sie bei 23 kHz.

In Fig. 4 ist der qualitative Verlauf der Meßspannung für $\gamma$ = 0,5 und $\gamma$ = 0,25 dargestellt.

Der Kondensator $C_D$ spielt eine wichtige Rolle nicht nur bei der Gewinnung der Dreieckspannung, sondern wirkt zusammen mit dem Widerstand $R_{T2}$ als Differenzierglied. Dadurch wird der Phasenrand vergrößert und die Stabilität allgemein erhöht.

Bei dem in den Figuren 1 bis 3 gezeigten Durchflußumrichtern wird die Ausgangsspannung eines Eintakt-Durchflußumrichters mit besonders hoher Genauigkeit geregelt. Die Regelung wirkt sowohl den dynamischen Laständerungen als auch den Änderungen der Versorgungsspannung schnell entgegen. Bei den Umrichtern nach Fig. 1 und 2, die eine galvanische Trennung aufweisen, haben alle Komponenten für die Bildung des Meßwertes ihr Bezugspotential am Ausgang des Gerätes. Ferner erfolgt die Anpassung an den Leistungsteil ohne Eingriff in denselben. Das Abschaltsignal in digitaler Form für die Pulsbreitensteuerung wird mit Hilfe des Schwellwertschalters direkt aus einem R-C-Netzwerk gewonnen.

Die in den Figuren 1 bis 3 gezeigten Schaltungsanordnungen haben in vorteilhafter Weise eine hohe statische Genauigkeit der Ausgangsspannung. Ferner ergeben sich eine schnelle Ausregelung dynamischer Laständerungen und eine schnelle Ausregelung von Eingangsspannungsschwankungen. Die Stabilität im Bereich der Taktfrequenz ist auch für einen Tastgrad $\gamma$ > 0,5 gegeben. Außerdem ergibt sich eine besonders geringe Störempfindlichkeit gegen hochfrequente Störungen.

**Ansprüche**

1. Schaltungsanordnung zur Regelung der Ausgangsspannung eines Eintakt-Durchflußumrichters mit Freilaufdiode (D2) und daran angeschlossener Drossel (L) im Hauptstromkreis, mit einem mit seiner Schaltstrecke zwischen Eingang und Ausgang des Umrichters angeordneten elektronischen Schalter (Ts), mit einer der Steuerstrecke des elektronischen Schalters (Ts) vorgeschalteten eine bistabile Kippstufe (K) enthaltenden Steuereinrichtung zur Impulsbreitensteuerung, wobei die bistabile Kippstufe (K) durch Taktimpulse (T) eines Taktgebers setzbar und durch Abschaltimpulse rücksetzbar ist, die von einem eine Vergleichsspannungsquelle ($U_{ref}$) enthaltenden meßgrößengesteuerten Schwellwertschalter (S) abgegeben werden, dadurch gekennzeichnet, daß der Kondensator ($C_v$) einer am Ausgang (a, b) des Umrichters angeschlossenen Kondensator-Widerstand-Serienschaltung ($C_v$, $R_v$) und eine Vergleichsspannungsquelle ($U_{Ref}$) mit ein und demselben, einen Bezugspunkt bildenden Anschluß (a in Fig. 1 ; b in Fig. 2) des Ausgangs (a, b) verbunden sind und daß der gegenüber dem Bezugspunkt Spannung führende Anschluß des Kondensators ($C_v$) über einen Spannungsteiler ($R_{T1}$, $R_{T2}$) an den Meßgrößeneingang (−) und der mit der Freilaufdiode (D2) verbundene Anschluß der Drossel (L) über einen weiteren Widerstand ($R_D$) an den Meßgrößeneingang (−) des Schwellwertschalters (S) geführt sind und daß der zwischen Spannung führendem Anschluß des Kondensators ($C_v$) und Schwellwertschalter (S) liegende Widerstand ($R_{T2}$) des Spannungsteilers ($R_{T1}$, $R_{T2}$) durch einen Kondensator ($C_D$) überbrückt ist, dessen Kapazität wesentlich kleiner bemessen ist als die Kapazität des Kondensators ($C_v$) der Kondensator-Widerstand-Serienschaltung, und daß der Wert des Widerstandes ($R_v$) der Kondensator-Widerstand-Serienschaltung ($C_v$, $R_v$) wesentlich, insbesondere mindestens um eine Größenordnung, kleiner bemessen ist als der Wert der Widerstände ($R_{T1}$, $R_{T2}$) des Spannungsteilers.

2. Schaltungsanordnung nach Anspruch 1, dadurch gekennzeichnet, daß zwischen dem Schwellwertschalter (S) und der bistabilen Kippstufe (K) ein Optokoppler (O) angeordnet ist.

3. Schaltungsanordnung nach Anspruch 1 oder 2, dadurch gekennzeichnet, daß bei einem maximalen Tastgrad $\gamma_{grenz}$ des Eintakt-Durchflußumrichters der Innenwiderstand ($R_p$) des Spannungsteilers und der den Widerstand ($R_{T2}$) des Spannungsteilers überbrückende Kondensator ($C_D$) derart bemessen sind, daß die Gleichung

$$\gamma_{grenz} = \frac{1}{\frac{T}{\tau}} \ln \frac{e^{\frac{T}{\tau}} + 1}{2}$$

gilt, wobei $\tau$ das Produkt aus dem Innenwiderstand ($R_p$) des Spannungsteilers und dem den Widerstand ($R_{T2}$) des Spannungsteilers überbrückenden Kondensator ($C_D$) und T der Kehrwert der Taktfrequenz sind.

**Claims**

1. A circuit arrangement for regulating the output voltage of a single-pulse flow converter having a free-running diode (D2) and a choke (L) connected thereto in the main circuit, and comprising an electronic switch (Ts) whose switching path is arranged between the input and output of the converter, and comprising a control device connected preceding the control path of the electronic switch (Ts), contains a bistable flip-flop (K) and serves to control the pulse width, where the bistable flip-flop (K) can be set by timing pulses (T) of a pulse generator and reset by disconnecting pulses which are transmitted by a threshold switch (S) which is controlled by measured variables and contains a comparison voltage source ($U_{ref}$), characterised in that the capacitor ($C_v$) of a series capacitor-resistor combination ($C_v$, $R_v$), connected at the output (a, b) of the converter, and a comparison voltage source ($U_{ref}$) are connected to the same terminal of the output (a, b), (a in Figure 1 ; b in Figure 2), which forms a reference point, that the terminal of the capacitor ($C_v$) carrying voltage in comparison to the reference point is coupled to the measured variable input (−) by means of a voltage divider ($R_{T1}$, $R_{T2}$) and the terminal of the choke (L) connected to the free-running diode (D2) is led to the measured variable input (−) of the threshold switch (S) by means of a further resistor ($R_D$), that the resistance ($R_{T2}$) of the voltage divider ($R_{T1}$, $R_{T2}$) arranged between the voltage-carrying terminal of the capacitor ($C_v$) and the threshold switch (S) is bridged by a capacitor ($C_D$) whose capacitance is dimensioned so as to be considerably smaller than the capacitance of the capacitor (C) of the series capacitor-resistor combination, and that the value of the resistance ($R_v$) of the series capacitor-resistor combination ($C_v$, $R_v$) is dimensioned to be essentially smaller, in particular by at least one order of magnitude, than the value of the resistance ($R_{T1}$, $R_{T2}$) of the voltage divider.

2. A circuit arrangement as claimed in Claim 1, characterised in that an opto-coupler (0) is arranged between the threshold switch (S) and the bistable flip-flop (K).

3. A circuit arrangement as claimed in Claim 1 or 2, characterised in that in the event of a maximal keying rate $\gamma_{grenz}$ of the single-pulse flow converter, the internal resistance ($R_p$) of the voltage divider and the capacitor ($C_D$) bridging the resistance ($R_{T2}$) of the voltage divider are dimensioned to satisfy the

equation

$$\gamma_{grenz} = \frac{1}{\frac{T}{\tau}} \ln \frac{e^{\frac{T}{\tau}} + 1}{2}$$

where $\tau$ is the product from the internal resistance ($R_p$) of the voltage divider and the capacitor ($C_D$) bridging the resistance ($R_{T2}$) of the voltage divider, and T is the inverse value of the pulse frequency.

## Revendications

1. Montage pour régler la tension de sortie d'un convertisseur à impulsions comportant une diode unidirectionnelle (D2) et une bobine d'arrêt (L), raccordée à cette dernière, dans le circuit principal, un commutateur électronique (Ts) dont la voie de commutation est disposée entre l'entrée et la sortie du convertisseur, un dispositif de commande branché en amont de la voie de commande du commutateur électronique (Ts) et contenant un étage à bascule bistable (K) et servant à la commande de la largeur d'impulsions, l'étage à bascule bistable (K) pouvant être positionné par des impulsions de cadence (T) d'un générateur de cadence et pouvant être ramené à l'état initial par des impulsions de débranchement qui sont délivrées par un commutateur à valeur de seuil (S) contenant une source de tension de comparaison ($U_{Ref}$) et commandé par des grandeurs de mesure, caractérisé en ce que le condensateur ($C_v$) d'un circuit série à condensateur et à résistance ($C_v$, $R_v$), relié à la sortie (a, b) du convertisseur et une source de tension de comparaison ($U_{ref}$) sont reliés à une seule et même borne (a sur la figure 1 ; b sur la figure 2), constituant un point de référence de la sortie (a, b) et que la borne du condensateur ($C_v$), qui est à une certaine tension par rapport au point de référence est reliée, par l'intermédiaire d'un diviseur de tension ($R_{T1}$, $R_{T2}$), à l'entrée (−) de la grandeur de mesure et la borne de la bobine d'arrêt (L), qui est reliée à la diode unidirectionnelle (D2), est reliée, par l'intermédiaire d'une autre résistance ($R_D$), à l'entrée (−) de la grandeur de mesure du commutateur à valeur de seuil (S), et que la résistance ($R_{T2}$) du diviseur de tension ($R_{T1}$, $R_{T2}$), qui est située entre la borne du condensateur ($C_v$) qui est à ladite certaine tension, et le commutateur à valeur de seuil (S), est shuntée par un condensateur ($C_D$) dont la capacité a une valeur nettement inférieure à la capacité du condensateur ($C_v$) du circuit série à condensateur et résistance, et que la valeur de la résistance ($R_v$) du circuit série à condensateur et résistance ($C_v$, $R_v$) est dimensionnée avec une valeur nettement inférieure, notamment d'au moins un ordre de grandeur, à la valeur des résistances ($R_{T1}$, $R_{T2}$) du diviseur de tension.

2. Montage selon la revendication 1, caractérisé en ce qu'un optocoupleur (0) est disposé entre le commutateur à valeur de seuil (S) et l'étage à bascule bistable (K).

3. Montage selon la revendication 1 ou 2, caractérisé en ce que, pour un taux d'impulsions maximum $\gamma_{limite}$ du convertisseur à impulsions, la résistance interne ($R_v$) du diviseur de tension et le condensateur ($C_D$) shuntant la résistance ($R_{T2}$) du diviseur de tension sont dimensionnés de telle manière que la relation

$$\gamma_{limite} = \frac{1}{\frac{T}{\tau}} \ln \frac{e^{\frac{T}{\tau}} + 1}{2}$$

est satisfaite, $\tau$ étant le produit de la résistance interne ($R_p$) du diviseur de tension et de la capacité ($C_D$) shuntant la résistance ($R_{T2}$) du diviseur de tension, et T étant la valeur inverse de la fréquence de cadence.

## FIG 1

## FIG 2

# FIG 3

# FIG 4